Europäisches Patentamt

European Patent Office

Office européen des brevets

(19)

(11) Numéro de publication : **0 101 365**
**B1**

(12)                 FASCICULE DE BREVET EUROPÉEN

(45) Date de publication du fascicule du brevet :
30.12.86

(51) Int. Cl.⁴ : **F 16 F   9/30**, B 60 G  17/04,
B 60 G  25/00

(21) Numéro de dépôt : 83401584.4

(22) Date de dépôt : 01.08.83

(54) **Ressort perfectionné amortisseur à compression hydrostatique d'élastomère et son procédé de fabrication.**

(30) Priorité : 02.08.82 FR 8213475

(43) Date de publication de la demande :
22.02.84 Bulletin 84/08

(45) Mention de la délivrance du brevet :
30.12.86 Bulletin 86/52

(84) Etats contractants désignés :
DE GB IT

(56) Documents cités :
EP-A- 0 048 659
DE-B- 1 117 413
FR-A- 1 090 440
FR-A- 1 091 681
FR-A- 1 160 479
FR-A- 1 302 474
FR-A- 1 393 384
FR-A- 2 349 067

(73) Titulaire : SOCIETE D'EXPLOITATION DES RES-
SORTS AUTO-AMORTISSEURS JARRET Société Anonyme dite:
15 rue Godot-de-Mauroy
F-75009 Paris (FR)

(72) Inventeur : Jarret, Jean
21, avenue Foch
F-75016 Paris (FR)
Inventeur : Jarret, Jacques
32, allée des Soudanes
F-78430 Louveciennes (FR)

(74) Mandataire : Levesque, Denys et al
Cabinet Beau de Loménie 55, rue d'Amsterdam
F-75008 Paris (FR)

## Description

On sait réaliser des ressorts à compression hydrostatique dont le boîtier en forme de tube aplati cintré contient l'élastomère en compression hydrostatique (FR-A-2 349 067).

Cependant, l'un des inconvénients de ces ressorts en forme de tube cintré (en C ou en S) réside dans leur grande souplesse, c'est-à-dire leur tendance à s'écraser notablement sous l'effet d'une charge statique donnée. Il s'ensuit que, si la charge varie, l'écrasement varie, ce qui peut ne pas convenir pour certaines utilisations du ressort. C'est notamment le cas lorsque l'on emploie ces ressorts pour suspendre une caisse de véhicule automobile par rapport à un châssis portant les roues.

On sait par ailleurs (brevet français n° 1 091 681) que, en chauffant la masse d'un élastomère enfermée dans un boîtier déformable, on dilate cet élastomère dans ce boîtier, ce qui permet de régler la réaction élastique du ressort à compression hydrostatique d'élastomère ainsi constitué. On peut ainsi ajuster la longueur du ressort et la rendre constante quelle que soit la variation de la charge qu'il supporte ou la variation de température qu'il subit.

Or, compte tenu de la forme même de ces ressorts, en S ou en C, de grande longueur par rapport à leur section, un échauffement de l'élastomère doit conduire rapidement à un équilibre thermique et un échauffement du boîtier, ce qui, après constatation expérimentale, donne des résultats médiocres quant à l'effet recherché.

On s'est rendu compte cependant que, si l'on utilise une âme métallique noyée dans l'élastomère comme élément électriquement résistant, on pouvait transmettre rapidement un flux de chaleur à l'élastomère et créer transversalement au tube un gradient de température qui, du fait de l'importante inertie thermique et du pouvoir isolant de l'élastomère, reste permanent. On atteint alors le but recherché dans de bien meilleures conditions.

L'invention a donc pour premier objet un ressort perfectionné amortisseur à compression hydrostatique d'élastomère constitué par un boîtier en forme de tube élastique déformable, cintré, de section aplatie, rempli d'élastomère et renfermant une âme centrale de section également aplatie en un matériau flexible, noyée dans l'élastomère (conformément à la demande de brevet français précitée).

Selon l'une des caractéristiques principales de l'invention, le ressort est doté d'un dispositif de régulation de la dilatation de l'élastomère dans le boîtier, ce dispositif comprenant une résistance chauffante constituée par ladite âme, dont le matériau constitutif est électriquement résistant, et reliée à une source de courant électrique via un interrupteur dont l'actionnement est commandé par un détecteur de la longueur du ressort.

Dans un mode préféré de réalisation, ledit ressort comporte deux embouts métalliques solidaires de l'âme et une enveloppe déformable étanche, connectée de manière étanche auxdits embouts qui sont pourvus de moyens pour la connexion sélective du volume intérieur de l'enveloppe avec une source de matériau de remplissage.

L'invention a également pour second objet un procédé de fabrication du ressort susdit selon lequel on intercale ladite enveloppe déformable entre l'âme et le tube extérieur qui est constitué par une armature de fibres souple non encore imprégnée de résine, puis on gonfle à l'air ladite enveloppe au travers desdits embouts en maintenant la pression de gonflage pendant l'imprégnation et la cuisson du tube extérieur et enfin on injecte au travers de l'un desdits embouts l'élastomère susdit dans l'espace situé entre l'âme et l'enveloppe à une pression déterminée.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

la figure 1 est une vue partiellement en coupe d'un ressort selon l'invention,

la figure 2 est une vue de détail de l'une des extrémités du ressort de la figure 1.

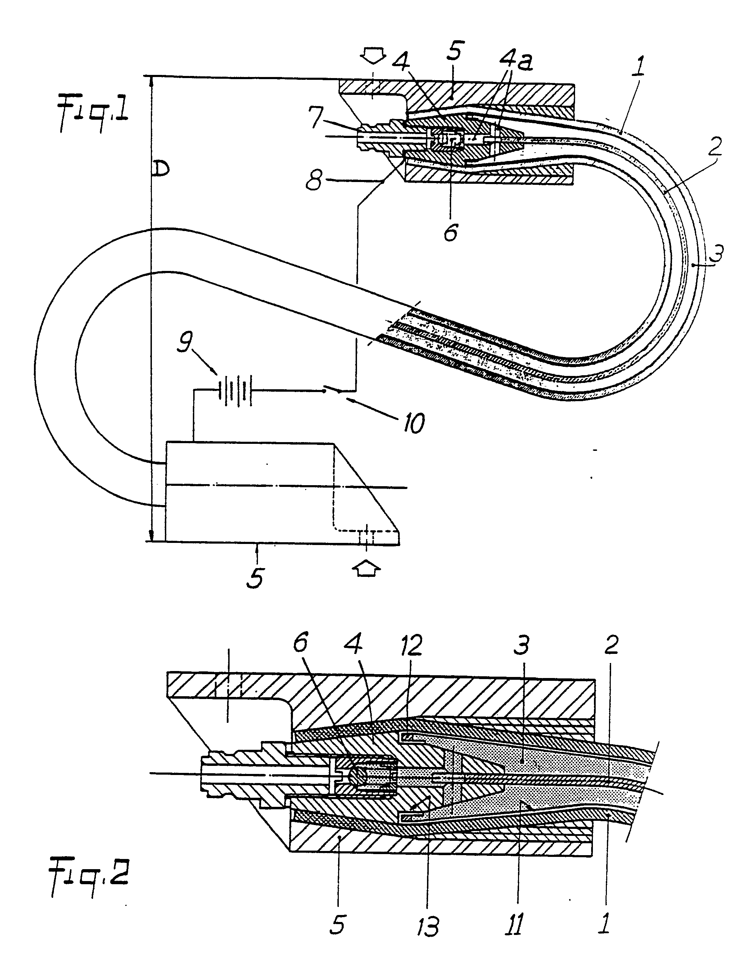

En se reportant tout d'abord à la figure 1, on voit un ressort en forme de S comportant :

une enveloppe extérieure 1 en forme de tube en matériau stratifié (verre époxy par exemple) dont la section présente une forme sensiblement elliptique et dont l'épaisseur de paroi représente environ 1/5 du petit axe de la section elliptique,

une âme métallique 2 (acier inoxydable 18/8 par exemple) de section très aplatie dont l'épaisseur est environ 1/10 de la largeur, cette âme étant de préférence perforée d'un grand nombre de trous cylindriques permettant d'augmenter la résistance au passage du courant,

une masse d'élastomère 3 comprimé (par exemple gomme de silicone à très haute viscosité) occupant la totalité du volume disponible entre l'âme métallique et l'enveloppe extérieure en matériau stratifié, l'élastomère étant choisi pour son fort coefficient de dilatation thermique qui permet une augmentation du volume de l'élastomère, sous pression constante, de 1/1000 pour une élévation de température de 1 °C.

Chaque extrémité du tube 1 est pourvue d'un embout 4 qui coopère avec une platine 5 pour fermer de manière étanche le tube 1. La platine 5 sert, quant à elle, d'élément de liaison du ressort au mécanisme qui appliquera au ressort les forces extérieures. Elle est normalement isolée électriquement de l'embout 4 par le tube 1 lui-même.

L'embout est attelé à l'âme 2 et comporte une série de canaux 4a équipés d'un mécanisme de retenue (un clapet à bille 6) permettant de remplir l'espace compris entre l'âme 2 et le tube depuis l'extérieur au moyen d'un organe de raccordement 7 à une source de produit de remplissage.

L'embout 4 peut également être électriquement connecté par un conducteur 8 à une source de courant électrique 9 (par exemple une batterie d'accumulateurs). Ainsi, l'âme 2 est placée en tant que résistance électrique entre la batterie 9 et la masse (représentée par la platine 5 opposée à l'embout 2 relié au conducteur 8).

Un interrupteur 10 est ouvert normalement quand les platines 5 sont distantes d'une valeur déterminée D. Si cette distance diminue sous l'effet de la charge, l'interrupteur 10 se ferme et on crée une dissipation d'énergie électrique sous forme de chaleur dans l'âme 2. Ce flux de chaleur provoque une dilatation de l'élastomère 3 qui entraîne un retour à l'écartement D susdit des platines 5 interrompant à nouveau la circulation de courant.

Dans un ressort réalisé conformément aux dispositions susmentionnées, il est possible de supporter élastiquement une charge statique variable en maintenant constante la distance, dans le sens vertical, qui sépare les deux embouts du ressort. En conséquence, sur un véhicule équipé pour sa suspension par de tels ressorts, il sera possible, grâce à la fourniture directe d'énergie électrique, d'assurer une distance constante entre la caisse suspendue et le sol, quelle que soit la charge utile imposée au véhicule. Lorsqu'une charge statique supplémentaire est appliquée, le ressort s'écrase sous l'action gravitationnelle de cette charge, le rapprochement des embouts du ressort déclenche l'envoi d'un courant électrique dans l'âme du ressort en assurant, en fonction de l'énergie calorifique fournie, un déplacement relatif des deux embouts qui, généralement en quelques secondes ou en quelques dizaines de secondes, rétablit la position de la caisse suspendue par rapport au sol.

Sur la figure 2, on a représenté en détail une extrémité du ressort selon l'invention pour illustrer un procédé de fabrication avantageux de ce dernier. Certains des éléments déjà décrits portent les mêmes références. On notera que l'embout 4 est équipé d'une enveloppe 11 en matière élastique tubulaire assujettie de manière étanche à l'embout par un jonc métallique 12 dans une gorge 13 de l'embout. La même construction est réalisée à l'autre extrémité du ressort. On délimite ainsi entre l'âme 2 et l'enveloppe 11 une chambre qui peut être gonflée. L'enveloppe 11 s'applique alors contre le tube extérieur 1 qui est constitué de manière connue par une pluralité de tubes de fibres tissées destinées à être imprégnées de résine thermodurcissable. Les canaux 4a de l'embout 2 sont mis en communication avec une source de gaz comprimé, tandis que ceux de l'autre embout sont obturés soit par le clapet 6, soit par un bouchon.

Cette mise en place de l'enveloppe 11 est réalisée au moment de l'assemblage des constituants du ressort, c'est-à-dire avant imprégnation par la résine. Avant et pendant l'imprégnation des fibres de l'enveloppe extérieure, une pression est pneumatiquement établie et maintenue à l'intérieur de l'enveloppe du ressort, de telle manière que les fibres à haute résistance mécanique de l'enveloppe soient mises en position convenable pour résister aux hautes pressions ultérieures de l'élastomère. En effet, les fibres de l'enveloppe avant imprégnation sont généralement tissées d'une manière assez lâche, et leur orientation va définitivement s'établir sous l'action de la pression pneumatique, cette orientation étant définitivement effectuée lorsque le liquide d'imprégnation est devenu un matériau solide par polymérisation et cuisson. On augmente ainsi la résistance de l'enveloppe à la pression de l'élastomère et on évite notamment que le tissu des fibres ne reste plié au moment de l'imprégnation, ce qui aurait pour conséquence de réduire considérablement le module d'élasticité et la limite élastique du matériau stratifié dans la zone où le plissement aurait été conservé.

En outre, le maintien d'une pression intérieure de l'enveloppe au moment de l'imprégnation donne à ladite enveloppe la forme la plus convenable pour que soit établi un volume disponible entre l'âme et l'enveloppe afin que la gomme à haute viscosité puisse être aisément injectée par une extrémité et puisse occuper sans difficulté la totalité de la capacité de l'enveloppe. Une injection finale sous une pression déterminée permet d'ailleurs d'assurer une déformation élastique du ressort correspondant à l'obtention d'une précontrainte de l'enveloppe qui sera alors susceptible d'une plus grande déformation autorisant une augmentation de la course utile du ressort et de l'énergie mécanique emmagasinée dans le ressort.

Le ressort à compression hydrostatique d'élastomère réalisé conformément aux dispositions précédemment indiquées et suivant le mode spécifique de fabrication décrit ci-dessus constitue dans une application particulière un élément de suspension de véhicule qui permet d'assurer avec une grande fiabilité l'amortissement des mouvements relatifs des roues et de la partie suspendue du véhicule, tout en conservant à cette partie suspendue une assiette constante, corrigée par un apport d'énergie électrique fonction de la charge utile transportée.

## Revendications

1. Ressort perfectionné amortisseur à compression hydrostatique d'élastomère, constitué par un boîtier (1) déformable, de volume variable, rempli d'élastomère (3), le boîtier (1), en forme de tube élastique cintré de section aplatie, renfermant une âme centrale (2) de section également aplatie en un matériau flexible, noyée dans l'élastomère (3), le ressort étant caractérisé par le fait qu'il est doté d'un dispositif de régulation de la dilatation de l'élastomère (3) dans le boîtier (1), ce dispositif comprenant une résistance chauffante constituée par ladite âme (2), dont le matériau constitutif est électriquement résistant, et reliée à une source de courant électrique (9) *via* un interrupteur (10) dont l'actionnement est commandé par un détecteur de la longueur du ressort.

2. Ressort selon la revendication 1, caractérisé par le fait que ledit tube (1) est fermé à ses extrémités par deux embouts (4) métalliques solidaires de l'âme (2) par l'intermédiaire desquels l'âme (2) est reliée à la source de courant électrique (9).

3. Ressort selon la revendication 2, caractérisé par le fait qu'il comporte deux platines (5) de fixation de ses extrémités, montées sur les embouts (4) avec interposition d'un isolant électrique.

4. Ressort selon la revendication 3, caractérisé par le fait que les extrémités du tube (1), réalisé en matière électriquement isolante, coiffent les embouts (4) et assurent l'isolation de ceux-ci.

5. Ressort selon l'une quelconque des revendications précédentes, caractérisé par le fait que l'âme (2) comporte des évidements augmentant la résistance au passage du courant.

6. Procédé de fabrication du ressort selon l'une quelconque des revendications précédentes, comportant entre le tube (1) et l'élastomère (3) une enveloppe (11) déformable étanche, connectée de manière étanche aux embouts (4), tandis que chaque embout est pourvu de moyens (4a, 6) de connexion sélective du volume intérieur de l'enveloppe avec une source de matériau de remplissage, caractérisé par le fait que l'on intercale ladite enveloppe déformable (11) entre l'âme (2) et le tube (1) extérieur qui est constitué par une armature de fibres souple non encore imprégnée de résine, que l'on gonfle à l'air ladite enveloppe (11) au travers desdits embouts (4) en maintenant la pression de gonflage pendant l'imprégnation et la cuisson du tube (1) extérieur et que l'on injecte ensuite au travers de l'un des embouts (4) l'élastomère (3) dans l'espace situé entre l'âme (2) et l'enveloppe (11).

## Claims

1. Improved damping spring with elastomer hydrostatic compression, constituted by a deformable casing (1) of variable volume, filled with elastomer (3), the casing (1) being shaped as a bent elastic tube of flat section, and comprising a central core (2) of likewise flat section made in a flexible material, said core being embedded in the elastomer (3), said spring being characterized in that it is provided with a device for regulating the elastomer (3) expansion inside the casing (1), said device comprising a heating element constituted by said core (2), of which the constituting material is electrically resistant, and connected to a source of electrical current (9) *via* a switch (10) the operation of which is controlled by a detector of the spring length.

2. Spring according to claim 1, characterized by the fact that said tube (1) is sealed at both ends by two metallic endpieces (4) integral with the core (2), and through which said core (2) is connected to the source of electrical current (9).

3. Spring according to claim 2, characterized by the fact that it comprises two plates (5) for securing its ends, mounted on the endpieces (4) with insertion of an electrical insulant.

4. Spring according to claim 3, characterized by the fact that the ends of the tube (1), which is made in an electrically insulating material, cover the endpieces (4) over and ensure the insulation thereof.

5. Spring according to any one of the preceding claims, characterized by the fact that the core (2) comprises recesses increasing the resistance to the passage of the current.

6. Process for manufacturing the spring according to any one of the preceding claims, comprising between the tube (1) and the elastomer (3), a tight deformable envelope (11) connected in seal-tight manner to the endpieces (4), whereas each endpiece is provided with means (4a, 6) for selectively connecting the inner volume of the envelope to a source of filling material, characterized by the fact that said deformable envelope (11) is inserted between the core (2) and the outer tube (1) which is constituted by a reinforcement of supple fibres, which reinforcement is not yet impregnated with resin, that said envelope (11) is inflated with air through said endpieces (4) while the inflating pressure is maintained throughout impregnation and baking of the outer tube (1), and that the elastomer (3) is then injected through one of the endpieces (4) inside the space defined between the core (2) and the envelope (11).

## Patentansprüche

1. Verbesserte Dämpfungsfeder mit hydrostatischer Kompression eines Elastomers, bestehend aus einem deformierbarem Gehäuse (1) mit variablem Volumen, das mit einem Elastomer (3) aufgefüllt ist, wobei das Gehäuse (1), in Form eines gebogenen elastischen Rohres mit abgeflachtem Querschnitt, eine mittig angeordnete Seele (2) mit ebenfalls abgeflachtem Querschnitt aus einem flexiblem Material, das in das Elastomer (3) eingebettet ist, umschließt, gekennzeichnet durch eine Vorrichtung zum Einstellen der Ausdehnung des Elastomers (3) in dem Gehäuse (1), wobei diese Vorrichtung einen Heizwiderstand aufweist, der von der Seele (2) gebildet wird, deren Material einen elektrischen Widerstand bildet und die an eine elektrische Stromquelle (9) über einen Unterbrecher angeschlossen ist, dessen Betätigung durch einen Fühler der Federlänge gesteuert wird.

2. Feder nach Anspruch 1, dadurch gekennzeichnet, daß das Rohr (1) an seinen Enden mittels zweier Metallstopfen (4) verschlossen ist, die mit der Seele (2) fest verbunden sind, wobei die Seele (2) über die Stopfen mit der elektrischen Stromquelle (9) verbunden ist.

3. Feder nach Anspruch 2, dadurch gekennzeichnet, daß sie zwei Platinen (5) zur Befestigung ihrer Enden aufweist, die auf den Stopfen (4) unter Zwischenschaltung eines elektrischen Isolators befestigt sind.

4. Feder nach Anspruch 3, dadurch gekennzeichnet, daß die Enden des Rohres (1), die aus einem elektrisch isolierenden Material hergestellt sind, die Stopfen (4) umgeben und deren Isolation gewährleisten.

5. Feder nach einem der vorstehenden Ansprüche, dadurch gekennzeichnet, daß die Seele (2) Aussparungen aufweist, die den Stromwiderstand erhöhen.

6. Verfahren zur Herstellung einer Feder gemäß einem der vorstehenden Ansprüche, die zwischen dem Rohr (1) und dem Elastomer (3) eine dichte deformierbare Hülle (11) aufweist, die dicht an den beiden Stopfen (4) befestigt ist, während jeder Stopfen mit Mitteln (4a, 6) zum selektiven Verbinden des Innenvolumens der Hülle mit einer Füllmaterialversorgung versehen ist, dadurch gekennzeichnet, daß die deformierbare Hülle (11) zwischen der Seele (2) und dem Außenrohr (1) zwischengeschoben wird, wobei das Rohr aus einem Gewebe weicher, noch nicht mit Harz imprägnierter Fasern besteht, daß über die Stopfen (4) die Hülle (11) mit Luft aufgeblasen wird, wobei der Aufblasdruck während des Imprägnierens und der Wärmebehandlung des Außenrohrs (1) festgehalten wird und daß anschließend durch einen der Stopfen (4) das Elastomer (3) in den Raum injiziert wird, der zwischen der Seele (2) und der Hülle (11) gebildet ist.

Fig.1

Fig.2